# EUROPEAN PATENT SPECIFICATION

(11) **EP 0 503 819 B1**
(45) Date of publication and mention of the grant of the patent: **03.01.1996**
(21) Application number: 92301806.3
(22) Date of filing: 03.03.1992
(51) Int. Cl.: F16K 37/00

(54) **Method and apparatus for determining set pressure of pilot operated pressure relief valve**
Verfahren und Vorrichtung zum Ermitteln des Ansprechdrucks eines servogesteuerten Überdruckventils
Procédé et dispositif de détermination de la pression de déclenchement d'une soupape de sûreté servocommandée

(30) Priority: 14.03.1991 US 669690
(43) Date of publication of application: 16.09.1992
(73) Proprietor: DRESSER INDUSTRIES INC., Dallas Texas 75201 (US)
(72) Inventor: Danzy, Roger Dale, Pineville, Louisiana 71360 (US)
(74) Representative: Howick, Nicholas Keith

(56) References cited:
- EP-A- 0 245 947
- GB-A- 2 193 349
- US-A- 3 878 862
- US-A- 4 615 356

## Description

The invention relates to a testing system for a pilot operated, pressure relief valve which can be utilized to determine the setpoint of the relief valve without removing the relief valve from the line in which it is connected, or opening of the pressure relief valve.

Pilot operated safety valves or pressure relief valves are incorporated in practically every tank or line carrying fluid under substantial pressures. Various governmental agencies required the periodic testing of the setpoint of such pressure relief valves, or in other words, the line pressure at which the pilot will be actuated to in turn effect the opening of the pressure relief valve to vent the line pressure. It is also desirable to know the reset pressure of the pilot which will close the opened relief valve.

Two types of pilot operated relief valves are currently in use. One is a modulating, non-flowing pressure operated relief valve of the type shown in U. S. Patent No. 4,615,356. This valve incorporates as part of its structure a field test valve which requires the addition of a source of test pressure to make the test valve operable. Obviously, the incorporation of a test valve as a part of each pilot operated safety valve substantially increases the cost of such safety valves. Other testing arrangements require the removal of the entire valve from the system or the determination of the set pressure and closing pressure of the pilot operated safety valve by venting system media, which is highly undesirable. Flowing, modulating pilot valves present similar problems for determining the pilot setpoint.

There is a need therefore for a test valve system for pilot operated safety valves which is portable and which will effect the determination of the setpoint of the pilot of such safety valve, whether of the flowing or non-flowing type, without requiring the removal of the safety valve from the system or the venting of system media.

With the foregoing in mind, the present invention provides a testing system for a pilot operated relief valve of the type wherein movement of a pilot valve in response to line pressure effects the opening of the pressure relief valve;
said pilot valve having a line pressure fluid inlet passage and said pressure relief valve having a trapped fluid pressure chamber closed by the pilot valve in one position to maintain the pressure relief valve closed, but opened to an exhaust passage in the other position of the pilot valve;
a source of test fluid pressure having a pressure at least equal to the rated opening pressure of the pressure relief valve and a test valve connected to said source of test fluid pressure, the improvement characterized in that;
said test valve having a cylinder bore with a piston non-sealably mounted in said cylinder bore intermediate ends of said cylinder bore and means connecting one end of said cylinder bore to said test fluid pressure source;
said test valve including means connecting the other end of said cylinder bore to a test line having two test line branches;
means connecting one of said test line branches to said pilot valve fluid inlet passage;
means connecting the other test line branch to said trapped fluid pressure chamber ;
a pressure gauge ;
means for connecting said pressure gauge to said other end of said cylinder bore, whereby the opening of said pilot valve by test fluid pressure produces substantial fluid flow around said piston to generate a pressure force around said piston to move said piston toward said other end of the cylinder bore; and
a valve means operable by said piston movement to trap the fluid pressure supplied to said pressure gauge, thereby producing an indication of the pressure required to open said pilot valve.

The present invention further provides a method of testing a pressure relief valve connected in a pressurized fluid line without opening the relief valve, the pressure relief valve having a pilot valve for venting closing pressure holding the pressure relief valve closed when the line fluid pressure in the pressurized fluid line exceeds a predetermined value, the method being characterised by the steps of:
providing a test valve having a flow metering piston movable in a cylinder bore by flow around the piston between an open and closed position relative to a pressure gauge; the test valve including a spring bias urging said piston to said open position;
connecting said test valve between a two branch testing line and a source of test fluid pressure having a pressure at least equal to the predetermined value of the pressure at which the pilot valve vents closing pressure on the pressure relief valve; the first branch of said test line detachably connected to a pressured fluid input to said pilot valve and the second branch of said testing line detachably connected to a relief passage through which closing pressure on said pressure relief valve is vented; and
flowing the test fluid pressure from said source of test fluid pressure through the test valve to the two-branch testing line; the test fluid pressure in the first branch lifting said pilot valve and the test fluid pressure in the second branch maintaining at least a minimum closing pressure on the relief valve; the combined fluid flow through both said branches of said test line producing a pressure differential across said piston sufficient to shift said piston to said closed position relative to said pressure gauge to trap a reading of fluid pressure required to shift said pilot valve to its valve opening position.

In use, as a manually operated valve in the line leading to the source of test pressure is opened, the amount of fluid pressure applied to the inlet of the pilot (valve) will be gradually increased until a level is reached sufficient to effect a shifting of the pilot. The shifting of the pilot opens a venting passage for the head or trapper fluid pressure chamber existing above the main valve piston. Such piston does not, however, move from its closed position due to the fact that the test pressure is concurrently being supplied to the head through a larger area passage than that provided by the venting action of the pilot valve. Thus, the pilot valve can be actuated without effecting the operation of the main valve, thus eliminating any possibility of venting system media.

At the same time, the substantial increase in rate of flow of fluid through the two branch lines leading respectively to the pilot inlet and the trapped fluid pressure chamber or head of the main valve, produces a sufficient pressure differential across the piston in the test valve so as to effect the shifting of such piston toward the axial passage leading to the pressure gauge, thus sealing off and trapping the pressure in the pressure gauge to provide a reading of the actual test pressure at which the pilot valve was shifted to a vent opening position.

The restoration of the system to normal is readily accomplished by first manually closing off the source of test pressure. The pilot continues to vent until its closing or reset pressure is reached. This stops fluid flow through the test valve and permits the spring to move the piston of the test valve pack to its normal position releasing the trapped pressure acting on the pressure gauge and providing a reading of the pilot reset pressure.

Further advantages of the testing system embodying this invention will be readily apparent to those skilled in the art from the following detailed description taken in conjunction with the annexed sheets of drawings on which is shown a preferred embodiment of the invention.

FIGURE 1 is a schematic view of a testing system for pilot operated safety relief valves embodying this invention, with the elements of the system shown in their preset positions.

FIGURE 2 is a view similar to FIGURE 1 but showing the elements of the valves in their positions assumed when the pilot valve is actuated by test pressure to a venting position.

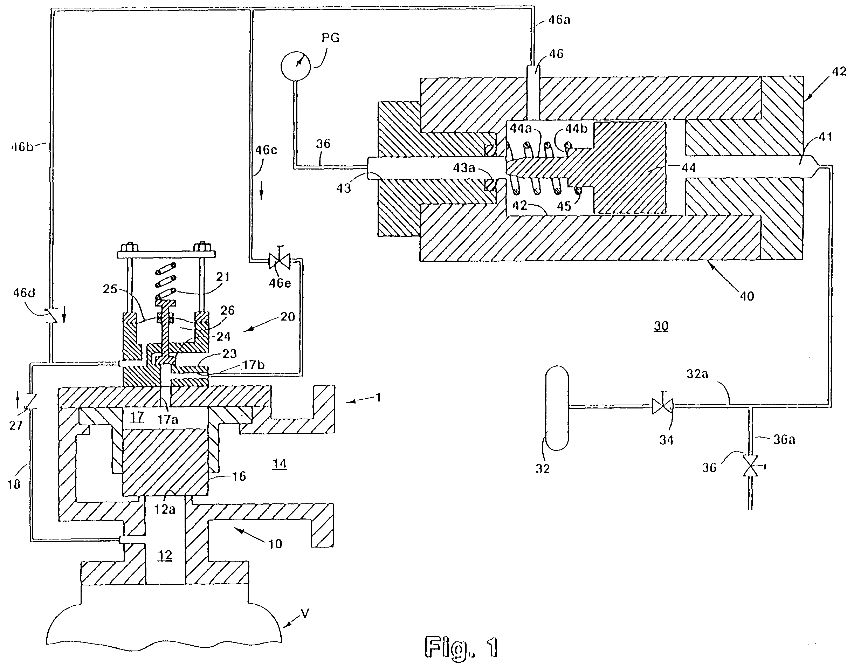

Referring to FIGURE 1, a conventional pilot operated pressure relief valve 1 is schematically illustrated as comprising a main valve housing 10 to which is affixed a pilot valve housing 20. The main valve housing 10 incorporates a fluid passage 12 leading to a vessel V or any other source of fluid pressure for which the valve functions as a safety valve. The main valve housing 10 is further provided with a venting or exhaust passage 14 and communication between passage 12 and passage 14 is normally blocked by a main piston valve 16 which is held in sealing relationship with an annular valve seat 12a by fluid pressure existing within a trapped fluid pressure chamber 17 defined above the piston 16.

A fluid passage 17a communicates between the trapped fluid pressure chamber or head 17 and a venting passage 23 defined in the pilot housing 20. A pilot valve head 24 normally prevents communication between passage 17a and venting passage 23, being urged to such closed position by a spring 21.

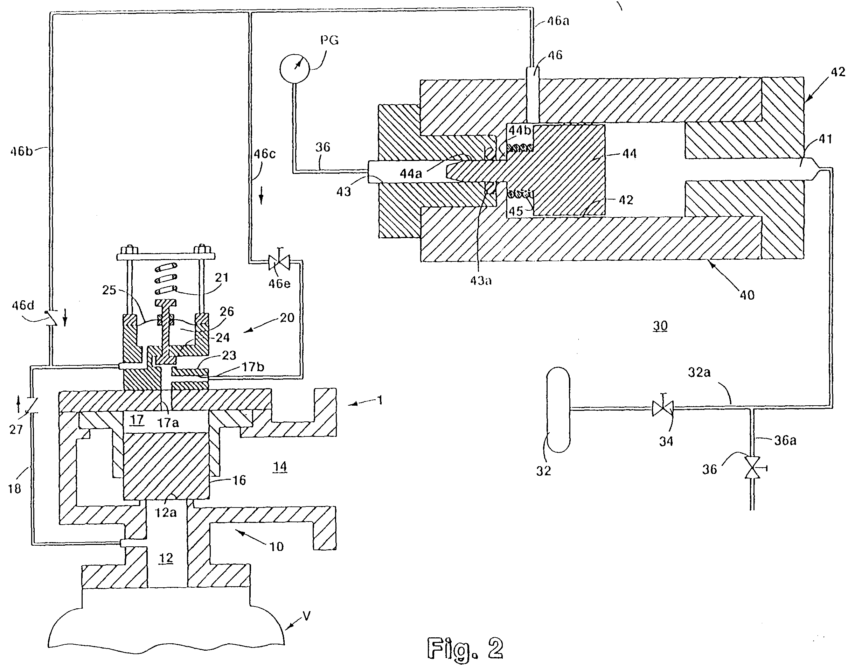

Valve head 24 is shiftable to an open or venting position, as shown in FIGURE 2, through the application of fluid pressure derived from the vessel V by virtue of line 18 and check valve 27, which acts upon a diaphragm 25 secured to valve head 24 and disposed across a chamber 26. Obviously, the valve head 24 could be operated by a piston or other equivalent fluid pressure responsive elements.

Thus in the normal operation of the pilot operated safety valve 1, when the fluid pressure within the vessel V reaches predetermined level, at which it is desired that the safety valve be actuated, such pressure is applied to the diaphragm 25 to effect the upward movement of the valve head 24 and the venting of the head 17 through passages 17a and 23. This permits the piston 16 to move upwardly and establish communication between the passage 12 and the main exhaust passage 14.

To periodically test the setpoint of the pilot valve, a testing apparatus 30 embodying this invention is provided. Such testing apparatus comprises a source of pressure 32, which may conveniently comprise a portable tank of pressurized non-toxic gas, a test valve unit 40 and a pressure gauge PG.

Test valve unit 40 comprises a conventional housing having a axial inlet port 41 at one end which communicates with cylinder bore 42. The other end of cylinder bore 42 is provided with an axial passage 43 which communicates with the pressure gauge PG though line 36. Within the cylinder bore 42, a piston 44 is slidably but non-sealably mounted therein so as to permit at all times constricted fluid flow around its periphery. Piston 44 is biased away from the axial passage 43 by a spring 45.

A radial port 46 communicates with the end of the piston 44 remote from the inlet passage 41 and communicates through line 46a to branch lines 46b and 46c. The one branch line 46b is detachably connected through a check valve 46d to the inlet line 18 for the pilot unit 10 of the safety valve. The other branch line 46c is connected through a manually operable valve 46e to a passage 17b communicating with the passage 17a which constitutes the pressure venting passage for the fluid pressure chamber 17. While not shown, the connection of the branch lines 45b and 45c to the pilot safety valve may be accomplished through utilization of conventional detachable connectors which automatically effect a closing of the passages to which the branch lines 46b and 46c communicate when the detachable connection is interrupted.

Lastly, a line 32a connects the test pressure source 32 to the inlet passage 41 of the test valve 40 through a manually operable valve 34. A venting valve 36 is connected by a line 36a to the line 32 for the purpose to be hereinafter described.

In the operation of the aforedescribed pilot test system, the manual valve 34 is opened producing a flow of fluid pressure through the test valve 40, around the piston 44 and into the two branch conduits 46b and 46c. Manual valve 46e in branch conduit 46c is opened.

As the pressure builds up in the chamber 26 underlying the diaphragm 25, no significant flow of test fluid through the test valve 40 occurs. The test pressure is, of course, in excess of the rated set pressure of the safety valve 1. As the test pressure supplied to the chamber 26 through the conduit branch 46b rises, it will eventually reach the setpoint of the pilot and the valve head 24 will lift, against the bias of spring 21, to initiate venting of fluid from the pressured fluid trapped in the chamber 17. However, any pressure lost through the shifting of the valve head 24 to the position shown in FIGURE 2 will be immediately made up by the direct pressure connection through the branch line 46c, hence the effective fluid pressure within the tapped fluid pressure chamber 17 will remain substantially the same. Thus, the main piston 16 will not be shifted form its closed position.

The increased flow of fluid through the branch lines 46b and 46c will produce a greatly increased rate of flow of fluid around the piston 44. This will result in the creation of a pressure differential across the piston 44, creating a force which will bias the piston to the left as viewed in the drawings, against the bias of spring 27. As the piston moves to the left, an integral plunger portion 44a on the piston enters the axial passage 43 and cooperates with the seal 43a to trap the fluid pressure supplied to the pressure gauge PG. A shoulder 44b on plunger portion 44a prevents piston 44 from overlapping radial port 45. See FIGURE 2. Thus, a stable reading can be obtain on the pressure gauge PG of the actual fluid pressure at which the pilot of the safety valve 1 was set.

The manually operated valve 34 supplying the test fluid pressure and the valve 46e are then closed. The pilot continues to vent until the closing point of the pilot is reached. This returns the system to the condition indicated in FIGURE 1 wherein there is no significant flow of test fluid through the test valve 40. Thus, the piston 44 will be returned to its initial position by the spring 46 and the pressure gauge PG will no longer be sealed off and will record the pressure in chamber 10 which will, of course, be equal to the closing pressure of the pilot. All pressure in test valve 40 may be vented by opening vent valve 36.

Thus, both the opening and closing pressures of the pilot operated safety valve may be expeditiously and reliably obtained through the utilization of the method and apparatus of this invention. Moreover, no opening of the main valve element of the pilot operated safety relief valve 1 is required so that discharge of media contained in the vessel V will be eliminated.

## Claims

1. A testing system for a pilot operated relief valve (1) of the type wherein movement of a pilot valve (20) in response to line pressure effects the opening of the pressure relief valve (1);
said pilot valve (20) having a line pressure fluid inlet passage (18) and said pressure relief valve (1) having a trapped fluid pressure chamber (17) closed by the pilot valve (20) in one position to maintain the pressure relief valve closed, but opened to an exhaust passage (14) in the other position of the pilot valve (20);
a source of test fluid pressure (32) having a pressure at least equal to the rated opening pressure of the pressure relief valve (1) and a test valve (40) connected to said source of test fluid pressure, characterized by;
said test valve (40) having a cylinder bore (42) with a piston (44) non-sealably mounted in said cylinder bore intermediate ends of said cylinder bore and means (32a) connecting one end of said cylinder bore (42) to said test fluid pressure source (32);
said test valve (40) including means (46) connecting the other end of said cylinder bore to a test line (46a) having two test line branches (46b, 46c);
means connecting one of said test line branches (46b) to said pilot valve fluid inlet passage (18);
means connecting the other test line branch (46c) to said trapped fluid pressure chamber (17);
a pressure gauge (PG);
means (36) for connecting said pressure gauge (PG) to said other end of said cylinder bore (42), whereby the opening of said pilot valve (20) by test fluid pressure produces substantial fluid flow around said piston (44) to generate a pressure force around said piston to move said piston toward said other end of the cylinder bore (42); and
a valve means (44a) operable by said piston movement to trap the fluid pressure supplied to said pressure gauge, thereby producing an indication of the pressure required to open said pilot valve.

2. The system of Claim 1 further characterized as comprising a resilient means (45) for urging said piston (44) towards said first end of said cylinder bore (42).

3. The system of Claim 1 characterized in that means for connecting (36) said pressure gauge (PG) to said other end of said cylinder bore (42) comprises an axial passage (43) in said test valve (40) communicating with said other end of said cylinder bore; and
said valve means (44a) comprises a coaxial plunger (44a) on said piston (44) sealingly engageable in said axial passage (43) by said movement of said piston (44) to said other end of said cylinder bore (42).

4. The system of Claim 3 further characterized in that said resilient means (45) comprising a compression spring (45) surrounding said plunger (44a) and urging said piston (44) towards one end of said cylinder bore (42).

5. A method of testing a pressure relief valve (1) connected in a pressurized fluid line (12) without opening the relief valve (1), the pressure relief valve (1) having a pilot valve (20) for venting closing pressure holding the pressure relief valve (1) closed when the line fluid pressure in the pressurized fluid line (12) exceeds a predetermined value, the method being characterised by the steps of:
providing a test valve (40) having a flow metering piston (44) movable in a cylinder bore (42) by flow around the piston (44) between an open and closed position relative to a pressure gauge (PG); the test valve (40) including a spring bias (45) urging said piston (44) to said open position;
connecting said test valve (40) between a two branch testing line (46b,46c) and a source (32) of test fluid pressure having a pressure at least equal to the predetermined value of the pressure at which the pilot valve (20) vents closing pressure on the pressure relief valve (1); the first branch (46b) of said test line detachably connected to a pressured fluid input to said pilot valve (20) and the second branch (46c) of said testing line detachably connected to a relief passage (17b) through which closing pressure on said pressure relief valve (1) is vented; and
flowing the test fluid pressure from said source (32) of test fluid pressure through the test valve (40) to the two-branch testing line (46b,46c); the test fluid pressure in the first branch (46b) lifting said pilot valve (20) and the test fluid pressure in the second branch (46c) maintaining at least a minimum closing pressure on the relief valve (1); the combined fluid flow through both said branches (46b, 46c) of said test line producing a pressure differential across said piston (44) sufficient to shift said piston (44) to said closed position relative to said pressure gauge (PG) to trap a reading of fluid pressure required to shift said pilot valve (20) to its valve opening position.

6. The method of Claim 5 further characterized by the step of interrupting fluid flow from said test fluid pressure source (32) to said test valve (40) and closing the second branch line (46c) whereby the subsequent closing of said pilot valve (20) eliminates flow through said test valve (40) to permit return of said test valve piston (44) to said open position relative to said pressure gauge (PG) to indicate the closing pressure of said pilot valve (20).

7. The method of Claim 6 further characterized by the step of venting the pressure in said cylinder bore (42) to return said pressure gauge (PG) and said test valve piston (44) to pre-test position.

## Patentansprüche

1. Testsystem für ein servogesteuertes Überdruckventil (1) von der Art, bei der die Bewegung eines Servoventils (20) als Reaktion auf den Leitungsdruck die Öffnung des Überdruckventils (1) bewirkt;
wobei das Servoventil (20) einen Einlaßkanal (18) für das Leitungsdruck-Fluid hat, und das Überdruckventil (1) eine Kammer (17) mit eingeschlossenem Fluiddruck hat, die in einer Position des Servoventils (20) verschlossen ist, um das Überdruckventil geschlossen zu halten, aber in der anderen Position des Servoventils (20) nach einem Auslaßkanal (14) geöffnet ist;
wobei eine Testfluiddruck-Quelle (32) einen Druck hat, der mindestens gleich dem nominalen Öffnungsdruck des Überdruckventils (1) ist, und ein Testventil (40) an die Testfluiddruck-Quelle angeschlossenen ist, dadurch gekennzeichnet, daß:
das Testventil (40) eine Zylinderbohrung (42) mit einem Kolben (44) aufweist, der in der Zylinderbohrung zwischen den Enden der Zylinderbohrung nicht-abdichtend angeordnet ist, und ein Mittel (32a) aufweist, das ein Ende der Zylinderbohrung (42) mit der Testfluiddruck-Quelle (32) verbindet;
das Testventil (40) ein Mittel (46) umfaßt, das das andere Ende der Zylinderbohrung mit einer Testleitung (46a) verbindet, die zwei Testleitungszweige (46b, 46c) aufweist;
ein Mittel einen der Testleitungszweige (46b) mit dem Einlaßkanal (18) für das Servoventilfluid verbindet;
ein Mittel den anderen Testleitungszweig (46c) mit der Fluiddruck-Kammer (17) verbindet;
ein Manometer (PG) vorgesehen ist;
ein Mittel (36) vorgesehen ist, um das Manometer (PG) mit dem anderen Ende der Zylinderbohrung (42) zu verbinden,
wodurch dann, wenn das Servoventil (20) geöffnet wird, infolge des Testfluiddrucks eine nennenswerte Fluidströmung um den Kolben (44) herum hervorgerufen wird, so daß eine Druckkraft um den Kolben herum erzeugt wird, die den Kolben nach dem anderen Ende der Zylinderbohrung (42) verschiebt; und
ein Ventilmittel (44a) vorgesehen ist, das durch die Kolbenverschiebung betätigbar ist, um den auf das Manometer gegebenen Fluiddruck einzuschließen, wodurch eine Anzeige des zum Öffnen des Servoventils erforderlichen Drucks erhalten wird.

2. System gemäß Anspruch 1, weiterhin dadurch gekennzeichnet, daß es ein elastisches Mittel (45) aufweist, um den Kolben (44) nach dem ersten Ende der Zylinderbohrung (42) zu drücken.

3. System gemäß Anspruch 1, dadurch gekennzeichnet, daß das Mittel (36) zum Verbinden des Manometers (PG) mit dem anderen Ende der Zylinderbohrung (42) einen axialen Kanal (43) in dem Testventil (40) aufweist, der mit dem anderen Ende der Zylinderbohrung in Verbindung steht; und
das Ventilmittel (44a) einen koaxialen Tauchkolben (44a) auf dem Kolben (44) aufweist, der durch die Verschiebung des Kolbens (44) nach dem anderen Ende der Zylinderbohrung (42) abdichtend in den axialen Kanal (43) einschiebbar ist.

4. System gemäß Anspruch 3, weiterhin dadurch gekennzeichnet, daß das elastische Mittel (45) eine Druckfeder (45) aufweist, die den Tauchkolben (44a) umgibt und den Kolben (44) nach einem Ende der Zylinderbohrung (42) drückt.

5. Verfahren zum Testen eines an eine unter Druck stehende Fluidleitung (12) angeschlossenen Überdruckventils (1), ohne das Überdruckventil (1) zu öffnen, wobei das Überdruckventil (1) ein Servoventil (20) zum Ablassen des Schließdrucks aufweist, der das Überdruckventil (1) geschlossen hält, wenn der Leitungsfluiddruck in der unter Druck stehenden Fluidleitung (12) über einem vorgegebenen Wert liegt, wobei das Verfahren durch die folgenden Schritte gekennzeichnet ist, bei denen:
ein Testventil (40) vorgesehen wird, das einen Strömungsmeßkolben (44) aufweist, der in einer Zylinderbohrung (42) durch die Strömung um den Kolben (44) herum zwischen einer bezüglich eines Manometers (PG) offenen und geschlossenen Position verschiebbar ist; wobei das Testventil (40) eine Vorspannungsfeder (45) umfaßt, die den Kolben (44) nach der offenen Position drückt;
das Testventil (40) zwischen einer zweizweigigen Testleitung (46b, 46c) und einer Testfluiddruck-Quelle (32) angeschlossen wird, die einen Druck aufweist, der mindestens gleich dem vorgegebenen Druckwert ist, bei dem das Servoventil (20) den auf dem Überdruckventil (1) lastenden Schließdruck abläßt; wobei der erste Zweig (46b) der Testleitung mit einem unter Druck stehenden Fluideingang des Servoventils (20) abnehmbar verbunden ist, und der zweite Zweig (46c) der Testleitung mit einem Entlastungskanal (17b) abnehmbar verbunden ist, über den der auf dem Überdruckventil (1) lastende Schließdruck abgelassen wird; und
der Testfluiddruck von der Testfluiddruck-Quelle (32) über das Testventil (40) auf die zweizweigige Testleitung (46b, 46c) gegeben wird; der Testfluiddruck in dem ersten Zweig (46b) das Servoventil (20) anhebt, und der Testfluiddruck in dem zweiten Zweig (46c) mindestens einen minimalen Schließdruck auf dem Überdruckventil (1) aufrechterhält; die kombinierte Fluidströmung durch die beiden Zweige (46b, 46c) der Testleitung einen Druckunterschied über dem Kolben (44) hervorruft, der ausreicht, um den Kolben (44) in die bezüglich des Manometers (PG) geschlossene Position zu verschieben, um den Fluiddruck, der erforderlich ist, um das Servoventil (20) in seine Ventilöffnungsposition zu verschieben, einzuschließen.

6. Verfahren gemäß Anspruch 5, weiterhin durch den Schritt gekennzeichnet, bei dem die Fluidströmung von der Testfluiddruck-Quelle (32) nach dem Testventil (40) unterbrochen wird, und die zweite Zweigleitung (46c) geschlossen wird, wodurch bei dem darauf folgenden Schließen des Servoventils (20) die Strömung durch das Testventil (40) aufgehoben wird, um die Rückkehr des Testventilkolbens (44) in die bezüglich des Manometers (PG) offene Position zu ermöglichen, so daß der Schließdruck des Servoventils (20) angezeigt wird.

7. Verfahren gemäß Anspruch 6, weiterhin durch den Schritt gekennzeichnet, bei dem der Druck in der Zylinderbohrung (42) abgelassen wird, damit die Anzeige des Manometers (PG) und der Testventilkolben (44) in die Position zurückkehren, in der sie vor dem Test waren.

## Revendications

1. Système d'essai pour une soupape de sûreté pilotée (1) de type dans lequel le déplacement d'une valve pilote (20), en réponse à une pression de conduit, effectue l'ouverture de la soupape de sûreté (1) ;
ladite valve pilote (20) ayant un passage d'entrée de fluide à la pression de conduit (18) et ladite soupape de sûreté (1) ayant une chambre de pression de fluide piégée (17), fermée par la valve pilote (20) dans une position de cette dernière de façon à maintenir la soupape de sûreté fermée, mais ouverte à un passage d'évacuation (14) dans l'autre position de la valve pilote (20) ;
une source de pression de fluide d'essai (32) ayant une pression au moins égale à la pression d'ouverture nominale de la soupape de sûreté (1) et une soupape d'essai (40) étant reliée à ladite source de pression de fluide d'essai, caractérisé par
ladite soupape d'essai (40) comportant un alésage (42) avec un piston (44) monté de manière non étanche dans ledit alésage entre les extrémités de ce dernier et un moyen (32a) reliant une extrémité dudit alésage (42) à ladite source de pression de fluide d'essai (32) ;
ladite soupape d'essai (40) comprenant des moyens (46) reliant l'autre extrémité dudit alésage à un conduit d'essai (46a) ayant deux branches de conduit d'essai (46b, 46c) ;
un moyen reliant une desdites branches de conduit d'essai (46b) audit passage d'entrée de fluide (18) de la valve pilote ;
un moyen reliant l'autre branche de conduit d'essai (46c) à ladite chambre de pression de fluide piégée (17) ;
un manomètre (PG) ;
un moyen (36) pour relier ledit manomètre (PG) à ladite autre extrémité dudit alésage (42), ce qui fait que l'ouverture de ladite valve pilote (20) par la pression de fluide d'essai produit un écoulement de fluide sensible autour dudit piston (44) de façon à créer une force de pression autour dudit piston pour déplacer ledit piston vers ladite autre extrémité de l'alésage (42) ; et
un moyen d'obturation (44a) pouvant être actionné par le déplacement dudit piston afin de piéger la pression de fluide fournie audit manomètre, produisant ainsi une indication de la pression requise pour ouvrir ladite valve pilote.

2. Système selon la revendication 1, caractérisé en outre en ce qu'il comprend un moyen élastique (45) pour pousser ledit piston (44) vers ladite première extrémité dudit alésage (42).

3. Système selon la revendication 1, caractérisé en ce que le moyen pour relier (36) ledit manomètre (PG) à ladite autre extrémité dudit alésage (42) comprend un passage axial (43) dans ladite soupape d'essai (40) communiquant avec ladite autre extrémité dudit alésage ; et
ledit moyen d'obturation (44a) comprend un plongeur coaxial (44a) sur ledit piston (44) pouvant être engagé de manière étanche dans ledit passage axial (43) grâce audit déplacement dudit piston (44) vers ladite autre extrémité dudit alésage (42).

4. Système selon la revendication 3, caractérisé en outre en ce que ledit moyen élastique (45) comprend un ressort de pression (45) entourant ledit plongeur (44a) et poussant ledit piston (44) vers une extrémité dudit alésage (42).

5. Procédé d'essai d'une soupape de sûreté (1) reliée dans un conduit de fluide sous pression (12) sans ouvrir la soupape de sûreté (1), la soupape de sûreté (1) ayant une valve pilote (20) pour purger la pression de fermeture maintenant la soupape de sûreté (1) fermée lorsque la pression de fluide de conduit, dans le conduit de fluide sous pression (12), dépasse une valeur prédéterminée, le procédé étant caractérisé par les étapes consistant :
à prévoir une soupape d'essai (40) ayant un piston de dosage d'écoulement (44) pouvant se déplacer dans un alésage (42) grâce à un écoulement autour du piston (44) entre des positions ouverte et fermée par rapport à un manomètre (PG) ; la soupape d'essai (40) comprenant un ressort de sollicitation (45) poussant ledit piston (44) vers ladite position ouverte ;
à relier ladite soupape d'essai (40) entre un conduit d'essai à deux branches (46b, 46c) et une source (32) de pression de fluide d'essai ayant une pression au moins égale à la valeur prédéterminée de la pression à laquelle la valve pilote (20) purge la pression de fermeture sur la soupape de sûreté (1) ; la première branche (46b) dudit conduit d'essai étant reliée de façon détachable à une entrée de fluide comprimé de ladite valve pilote (20) et la deuxième branche (46c) dudit conduit d'essai étant reliée de façon détachable à un passage de décharge (17b) à travers lequel la pression de fermeture sur ladite soupape de sûreté (1) est purgée ; et
à faire écouler la pression de fluide d'essai depuis ladite source (32) de pression de fluide d'essai en passant par la soupape d'essai (40) jusqu'au conduit d'essai à deux branches (46b, 46c) ; la pression de fluide d'essai dans la première branche (46b) soulevant ladite valve pilote (20) et la pression de fluide d'essai dans la deuxième branche (46c) maintenant au moins une pression de fermeture minimum sur la soupape de sûreté (1) ; l'écoulement de fluide combiné à travers lesdites deux branches (46b, 46c) dudit conduit d'essai produisant une différence de pression à travers ledit piston (44) suffisante pour déplacer ledit piston (44) jusqu'à ladite position fermée par rapport audit manomètre (PG) pour piéger une lecture de pression de fluide requise pour déplacer ladite valve pilote (20) jusqu'à sa position d'ouverture de valve.

6. Procédé selon la revendication 5, caractérisé en outre par l'étape consistant à interrompre l'écoulement de fluide depuis ladite source de pression de fluide d'essai (32) jusqu'à ladite soupape d'essai (40) et à fermer la deuxième branche de conduit (46c), ce qui a pour effet que la fermeture suivante de ladite valve pilote (20) élimine l'écoulement à travers ladite soupape d'essai (40) de façon à permettre le retour dudit piston de soupape d'essai (44) jusqu'à ladite position ouverte par rapport audit manomètre (PG) afin d'indiquer la pression de fermeture de ladite valve pilote (20),

7. Procédé selon la revendication 6, caractérisé en outre par l'étape consistant à purger la pression dans ledit alésage (42) afin de faire retourner ledit manomètre (PG) et ledit piston d'essai (44) jusqu'à la position de pré-essai.
